# EUROPEAN PATENT APPLICATION

(11) **EP 2 000 394 A2**
(43) Date of publication of application: **10.12.2008**
(21) Application number: 06730521.9
(22) Date of filing: 29.03.2006
(51) Int. Cl.: B62D 41/00, B60R 21/00, G01D 9/00, G08G 1/00

(54) **RECORDING DEVICE AND RECORDING METHOD**

(71) Applicant: Fujitsu Microelectronics Limited, Tokyo 163-0722 (JP)
(72) Inventor: NAGAI, Kouichic/o FUJITSU LIMITED,, Kawasaki-shi, Kanagawa;2118588 (JP)
(74) Representative: Thévenet, Jean-Bruno
(86) International application number: PCT/JP2006/306573
(87) International publication number: WO 2007/110958

(57) **Abstract**

There is provided a recording device capable of collecting information which makes it possible to investigate an accident. A recording section (11), such as a FeRAM, records vehicle information indicative of current conditions of the vehicle at predetermined recording intervals. An accident level-determining section (12) determines whether or not an accident has occurred, based on a magnitude of an impact on the vehicle detected by an impact-detecting section (20). When it is determined that an accident has occurred, a recording control section (13) causes the recording section (11) to record the vehicle information at the recording intervals (e.g. 0.1 seconds) shorter than those (e.g. 1 second) before the accident. This makes it possible to use pre-accident information and post-accident information to thereby investigate an accident in more detail.

## Description

### Technical Field

The present invention relates to a recording device installed in a vehicle and a recording method, and more particularly to a recording device and a recording method for collecting data necessary for investigating a situation in which an accident occurred.

### Background Art

As a typical device for recording information at occurrence of an accident, a flight recorder installed on an airplane is known, but recently, a device has come to be known which is installed in a vehicle (e.g. an automotive vehicle or a train) for collecting vehicle information for use in analysis of the cause of a traffic accident.

For example, Patent Literature 1 discloses a recording device configured to record the driving operations of a driver and the behavior of a vehicle for each time period of e.g. 10 seconds, and stop recording upon reception of an impact exceeding a predetermined level.

Further, Patent Literature 2 discloses a recording device configured to be capable of recording and storing, in a collision accident, video images of the surroundings of a vehicle and the inside of the compartment of the same before and after occurrence of a collision. Specifically, the recorded video images are updated for each time period of 10 to 60 seconds, and the recording operation and updating are stopped 2 to 30 seconds after an impact is sensed.

Patent Literature 3 discloses a technique in which recording of video images in a nonvolatile memory of a recording device is started upon the start of the engine of an automotive vehicle, and the video recording is stopped when an impact exceeding a predetermined level is sensed or when a predetermined time period has elapsed after the impact is sensed. In this technique, the recording device starts deleting stored video signals in chronological order, oldest first, when recording capacity is used up, or alternatively the recording device records video images over a desired time period and erases these after the lapse of the desired time period.
Patent Literature 1: Japanese Unexamined Patent Publication No. H09-123876
Patent Literature 2: Japanese Unexamined Patent Publication No. 2000-25659
Patent Literature 3: Japanese Unexamined Patent Publication No. 06-237463

### Disclosure of Invention

### Problems to be Solved by the Invention

However, in the recording device disclosed by Patent Literature 1, since recording is stopped when the recording device receives an impact exceeding the predetermined level, it is impossible to obtain post-accident information. For example, a case can be imagined in which the course of an automotive vehicle is changed by collision with another automotive vehicle, which leads to a further serious accident. In this case, if information of a situation immediately after occurrence of the accident is not recorded, it is impossible to investigate the accident.

On the other hand, in Patent Literature 2 and Patent Literature 3, video images recorded immediately before and after an accident are stored, and the accident is investigated based on the video images. In some cases, however, analysis cannot be performed well enough due to an ambient environment or weather.

The present invention has been made in view of the above circumstances, and hence an object thereof is to provide a recording device which is capable of collecting information that makes it possible to investigate an accident.

Another object of the present invention is to provide a recording method of collecting information that makes it possible to perform an accident investigation.

### Means for Solving the Problems

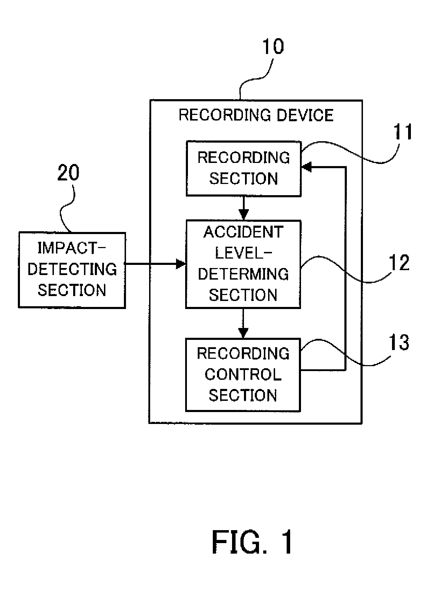

To solve the above problems, there is provided a recording device installed in a vehicle, as shown in FIG. 1, which comprises a recording section 11 that records vehicle information indicative of current conditions of the vehicle at predetermined recording intervals, an accident level-determining section 12 that determines whether or not an accident has occurred, based on a magnitude of an impact on the vehicle detected by an impact-detecting section 20, and a recording control section 13 that is operable when it is determined that an accident has occurred, to cause the recording section 11 to record the vehicle information at the recording intervals shorter than those before the accident.

According to this configuration, the recording section 11 records vehicle information indicative of current conditions of the vehicle at predetermined recording intervals, the accident level-determining section 12 determines whether or not an accident has occurred, based on the magnitude of an impact on the vehicle detected by the impact-detecting section 20, and when it is determined that an accident has occurred, the recording control section 13 causes the recording section 11 to record the vehicle information at the recording intervals shorter than those before the accident.

Further, there is provided a recording device installed in a vehicle, comprising a recording section that records vehicle information indicative of current conditions of the vehicle at predetermined recording intervals, an accident level-determining section that determines whether or not an accident has occurred, based on a magnitude of an impact on the vehicle detected by an impact-detecting section, and a recording control section that sets the recording interval before it is determined that an accident has occurred according to a speed of the vehicle.

According to this configuration, the recording section records vehicle information indicative of current conditions of the vehicle at predetermined recording intervals, the accident level-determining section determines whether or not an accident has occurred, based on the magnitude of an impact on the vehicle detected by the impact-detecting section, and the recording control section sets the recording interval before it is determined that an accident has occurred according to the speed of the vehicle.

Furthermore, there is provided a recording method comprising the steps of recording vehicle information indicative of current conditions of a vehicle in a recording section at predetermined recording intervals, determining whether or not an accident has occurred, based on a magnitude of an impact on the vehicle detected by an impact-detecting section, and recording the vehicle information in the recording section at the recording intervals shorter than those before the accident when it is determined that that accident has occurred.

According to this method, vehicle information indicative of current conditions of the vehicle is recorded in the recording section at predetermined recording intervals, whether or not an accident has occurred is determined based on the magnitude of an impact on the vehicle detected by the impact-detecting section, and when it is determined that that accident has occurred, the vehicle information is recorded in the recording section at the recording intervals shorter than those before the accident.

### Effects of the Invention

According to the present invention, vehicle information indicative of both the conditions of the vehicle before occurrence of an accident and the current conditions of the same after occurrence of the accident are both recorded, so that it is possible to investigate the cause of the accident based on various factors of the situation. Further, since the recoding interval after occurrence of the accident is set shorter than that before occurrence of the accident, it is possible to record an increased amount of information obtained immediately after occurrence of the accident, which is important to investigate the behavior of the shocked vehicle, in the recording section having a limited capacity.

Further, the recording interval before it is determined that an accident has occurred is set to vehicle speed such that the recording interval becomes longer as the vehicle speed is slower, so that it is possible to record an increased amount of information obtained immediately after occurrence of the accident, which is important to investigate the behavior of the shocked vehicle, in the recording section having a limited capacity. In this case, wasteful recording can be avoided, which also makes it possible to prolong the service life of the recording section.

The above and other objects, features and advantages of the present invention will become apparent from the following description when taken in conjunction with the accompanying drawings which illustrate preferred embodiments of the present invention by way of example.

### Brief Description of Drawings

[FIG. 1]
   FIG. 1 is a schematic configuration diagram of a recording device installed in a vehicle.
[FIG. 2]

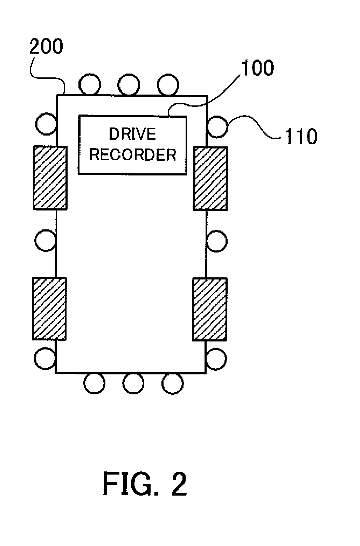

   FIG. 2 is a schematic view of an automotive vehicle on which a drive recorder is installed.
[FIG. 3]

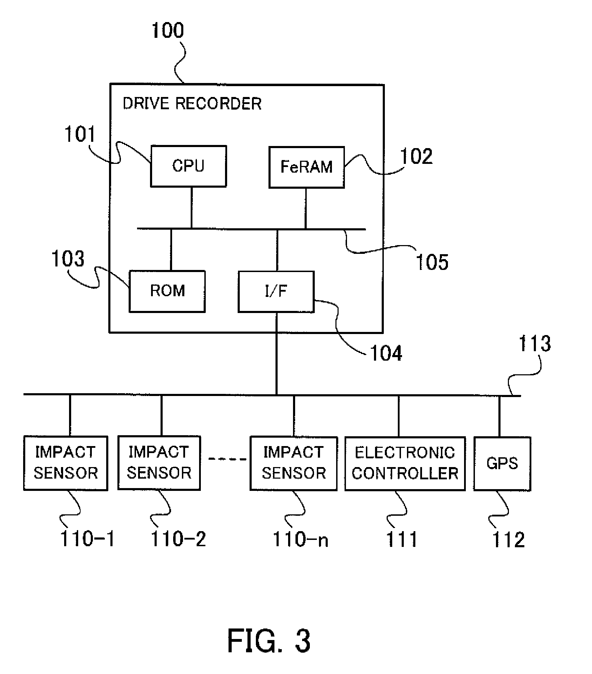

   FIG. 3 is a configuration diagram of an example of the drive recorder.
[FIG. 4]

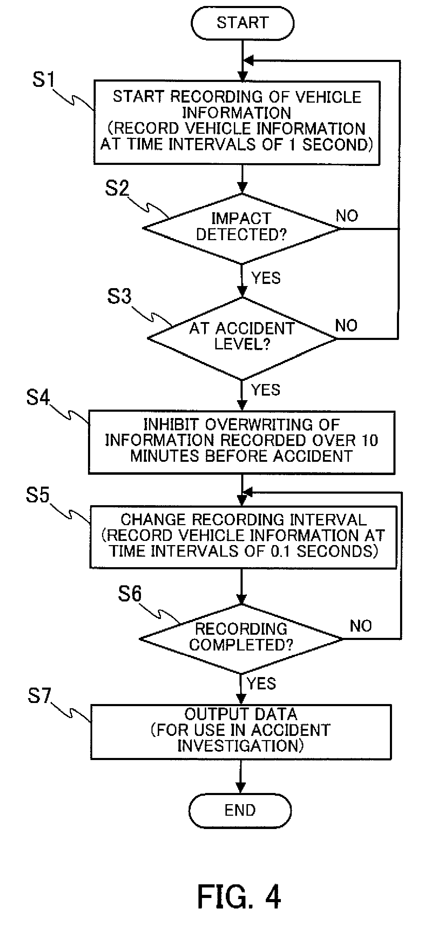

   FIG. 4 is a flowchart showing the operation of a drive recorder according to a first embodiment.
[FIG. 5]

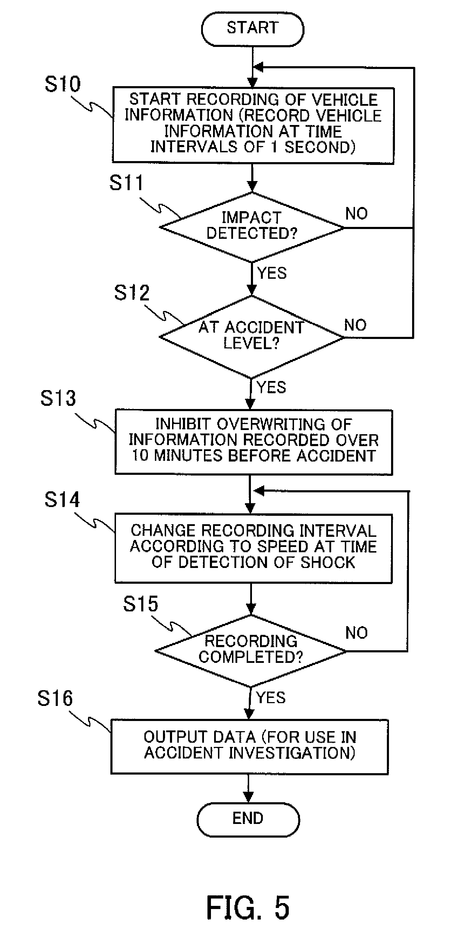

   FIG. 5 is a flowchart showing the operation of a drive recorder according to a second embodiment.
[FIG. 6]

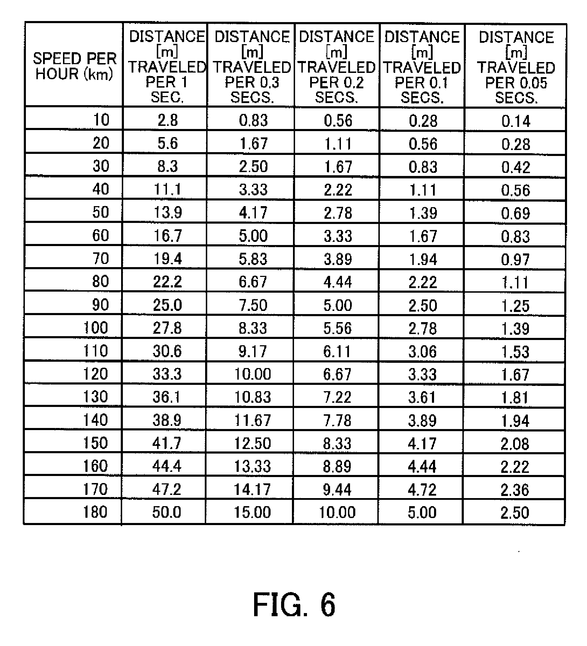

   FIG. 6 is a diagram showing distances each traveled at a speed over a time period.
[FIG. 7]

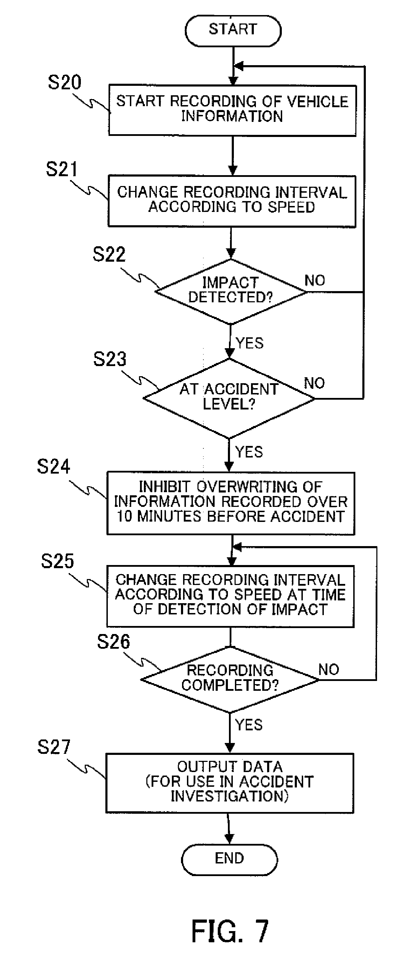

   FIG. 7 is a flowchart showing the operation of a drive recorder according to a third embodiment.
[FIG. 8]

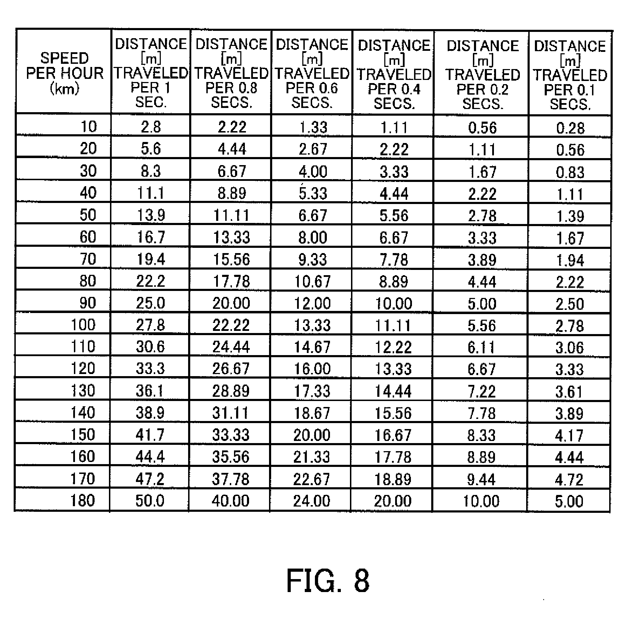

   FIG. 8 is a diagram showing distances each traveled at a speed over a time period.
[FIG. 9]

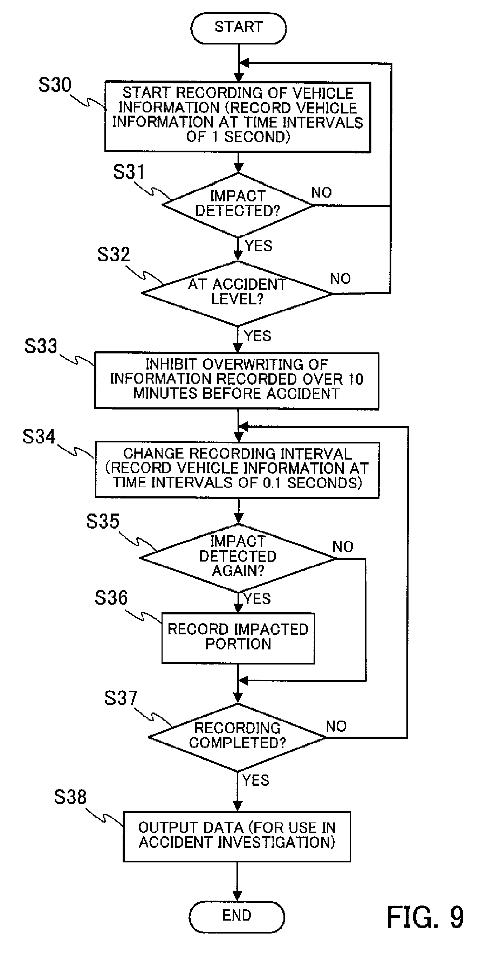

   FIG. 9 is a flowchart showing the operation of a drive recorder according to a fourth embodiment.
[FIG. 10]

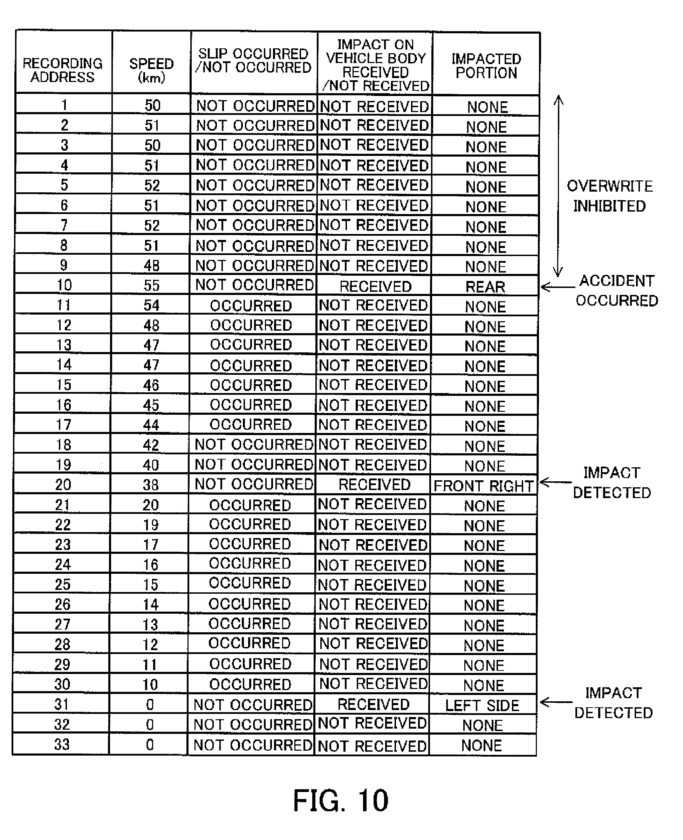

   FIG. 10 is a diagram showing part of vehicle information recorded in a FeRAM.

### Best Mode for Carrying Out the Invention

Hereinafter, embodiments of the present invention will be described in detail with reference to the drawings.

FIG. 1 is a schematic configuration diagram of a recording device installed in a vehicle.

The recording device 10 is installed on a body of an automotive vehicle or the like, and is comprised of a recording section 11, an accident level-determining section 12, and a recording control section 13.

The recording section 11 is implemented e.g. by a FeRAM (Ferroelectric Random Access Memory), and records vehicle information indicative of current conditions of the vehicle at predetermined recording intervals (e.g. every second). The vehicle information includes a radiator temperature, a status of an engine, a degree of acceleration, a magnitude of an impact, opening/closing of doors, ON/OFF of wipers, a shift position, ON/OFF of headlights and direction indicator lamps, brake pressure, brake locked or not, occurrence or non-occurrence of a slip, a degree of access pedal opening, vehicle speed, engine rotational speed, a steering angle, and position information.

The accident level-determining section 12 determines whether or not an accident has occurred, based on the magnitude of an impact on the vehicle detected by the impact-detecting section 20.

The recording control section 13 controls recording of vehicle information in the recording section 11. If the accident level-determining section 12 determines that an accident has occurred, the recording control section 13 causes the recording section 11 to record vehicle information at shorter recording intervals than those before the accident. For example, assuming that the recording interval is set to 1 second before the accident, the recording interval after the accident is set e.g. to 0.1 seconds. Further, overwriting of vehicle information recorded over a predetermined time period before occurrence of the accident is inhibited. If it is determined that no accident has occurred, the recording control section 13 causes the recording section 11 to record vehicle information at the same recording intervals as those before detection of the impact. Then, when the recording capacity is used up, the recording control section 13 causes the recording section 11 to record new vehicle information by sequentially overwriting items of the stored vehicle information in chronological order, oldest first.

In the following, a description will be given of the operation of the recording device.

The recording section 11 records vehicle information at time intervals of 1 second under the control of the recording control section 13 e.g. immediately after new vehicle registration. When the recording capacity of the recording section 11 is used up, the recording section 11 records new vehicle information by sequentially overwriting items of the stored vehicle information in chronological order, oldest first. If an impact on the vehicle is detected by the impact-detecting section 20, the accident level-determining section 12 of the recording device 10 determines, based on the magnitude of the impact, whether or not an accident has occurred. If no accident has occurred, the recording control section 13 causes the recording section 11 to record vehicle information at the same recording intervals (1 second) as those before detection of the impact. Then, when the remaining recording capacity of the recording section 11 is used up, the recording control section 13 causes the recording section 11 to record new vehicle information by sequentially overwriting items of the stored vehicle information in chronological order, oldest first.

On the other hand, if it is determined by the accident level-determining section 12 that an accident has occurred, the recording control section 13 sets the recording interval of the recording section 11 to a shorter time period of e.g. 1 second than that before the accident. At the same time, the recording control section 13 inhibits overwriting of vehicle information recorded over a predetermined time period before the accident, so as to save the information obtained immediately before the accident.

The recording device 10 is thus configured to be capable of recording vehicle information indicative of the actual conditions of the vehicle both before and after occurrence of the accident, so that it is possible to investigate based on the various factors of the situation how the accident is caused. Further, since the recoding interval after occurrence of the accident is set shorter than that before occurrence of the accident, it is possible to record an increased amount of information obtained immediately after occurrence of the accident, which is important to investigate the behavior of the vehicle having received an impact, in the recording section 11 having a limited capacity.

Although in the above, the recording control section 13 sets the recording interval after occurrence of the accident to a shorter time period than that before occurrence of the accident, the recording interval before occurrence of the accident may be set according to vehicle speed such that the recording interval becomes longer as the vehicle speed is slower, so as to make it possible to record an increased amount of information obtained immediately after occurrence of the accident, which is important to investigate the behavior of the shocked vehicle, in the recording section 11 having a limited capacity. Since wasteful recording can be avoided, it is also possible to prolong the service life of the recording section. This will be described in detail hereinafter.

Hereafter, the recording device will be described in detail.

It should be noted that in the following description, it is assumed that the recording device (hereinafter referred to as the drive recorder) is installed in an automotive vehicle.

First, a description will be given of a drive recorder according to a first embodiment.

FIG. 2 is a schematic view of the automotive vehicle on which the drive recorder is installed.

The drive recorder 100 is installed on a vehicle body 200 of the automotive vehicle. Further, impact sensors 110 for detecting an impact are arranged at a plurality of locations.

FIG. 3 is a configuration diagram of an example of the drive recorder.

The drive recorder 100 is comprised of a CPU (Central Processing Unit) 101, a FeRAM 102, a ROM 103 (Read Only Memory) 103, and an I/F (interface) 104, all of which are interconnected via a bus 105.

The CPU 101 controls the overall operation of the drive recorder 100 according to programs stored in the ROM 103.

The FeRAM 102 records various kinds of vehicle information under the control of the CPU 101.

The ROM 103 stores programs and the like executed by the CPU 101.

The I/F 104 is connected, via an in-vehicle bus 113, to devices, such as the impact sensors 110-1, 110-2, ..., 110-n that detect an impact, an electronic controller 111, and a GPS (Global Positioning System) 112 for acquiring position information (a position, a traveling direction, and the like), which are provided outside the drive recorder 100.

In the following, a description will be given of the operation the drive recorder 100 shown in FIG. 3.

FIG. 4 is a flowchart showing the operation of the drive recorder according to the first embodiment. In the drive recorder 100, the CPU 101 starts recording vehicle information in the FeRAM 102 immediately after new vehicle registration (step S1). The vehicle information from the impact sensors 110-1 to 110-n, the electronic controller 111, and the GPS 112 connected to the in-vehicle bus 113 is recorded in the FeRAM 102, via the I/F 104. The vehicle information includes a radiator temperature, conditions of the engine, a degree of acceleration, a magnitude of an impact, opening/closing of the doors, ON/OFF of the wipers, a shift position, ON/OFF of the headlights and the direction indicator lamps, brake pressure, brake locked or not, occurrence or non-occurrence of a slip, a degree of access pedal opening, vehicle speed, engine rotational speed, a steering angle, and position information. Although a CCD (Charge Coupled Device) camera or the like may be provided in the vehicle to acquire image data, it is preferable that the image data is small in data size. Such vehicle information is recorded in the FeRAM 102 at the time intervals of 1 second under the control of the CPU 101, irrespective of whether the automotive vehicle is at a stop or traveling.

The step S1 is repeatedly carried out before an impact is detected by one of the impact sensors 110-1 to 110-n after the start of recording of the vehicle information (step S2). When an impact is detected by any of the impact sensors 110-1 to 110-n, the CPU 101 determines, based on the magnitude of the impact, whether or not the impact is at an accident level (step S3). If the detected impact is not at the accident level, it is judged that the impact has not been caused by an accident, and the steps S1 to S3 are repeatedly carried. If the detected impact is at the accident level, the CPU 101 judges that an accident has occurred, and inhibits overwriting of information recorded over e.g. 10 minutes before the accident was detected, to thereby protect the information obtained immediately before occurrence of the accident (step S4). Further, the recording interval set for recording of the vehicle information in the FeRAM 102 is changed from 1 second to 0.1 seconds (step S5). As a consequence, the vehicle information is recorded at the time intervals of 0.1 seconds after the accident. Information obtained after the accident is also recorded in an area where overwritable information recorded before ten minutes before the accident is stored, and the step S5 is repeatedly carried out until the FeRAM 102 is filled with (step S6). When the FeRAM 102 is filled up, the CPU 101 terminates the writing and outputs data (step S7).

It should be noted that after termination of the writing, the FeRAM 102 may be placed in a write protect state so as to prevent the data from being tampered with. In this case, information indicative of the state may be displayed e.g. on a display for displaying conditions of the engine of the automotive vehicle. Further, even if supply of power from a battery to the drive recorder 100 is stopped, data recorded in the FeRAM 102 is saved.

The use of the vehicle information recorded as described above makes it possible to investigate an accident based on the vehicle information recorded before and after occurrence of the accident, so that whether the accident was caused by human error or mechanical trouble can be analyzed in detail. Further, it is possible to investigate how the accident was caused based on various conditions of the situation, without performing accident analysis based on image information alone.

Furthermore, since the recording interval after occurrence of the accident is set to a time period of 0.1 seconds which is shorter than the recording interval (1 second) before occurrence of the accident, it is possible to record an increased amount of information obtained immediately after occurrence of the accident, which is important to investigate the behavior of the shocked vehicle, in the FeRAM 102 having a limited capacity. Even if an accident occurs when the vehicle is at a stop, it is possible to use vehicle information recorded upon occurrence of the accident, for insurance negotiation or the like.

In addition, since the FeRAM 102 is used as a recording memory, it is possible to cope with instantaneous writing performed at time intervals of 0.1 seconds. Further, the FeRAM 102 has a rewrite endurance of 10¹²⁻¹⁴, which makes it possible to continue rewriting/writing of records over a long time period of approximately 10 years. What is more, the FeRAM 102 is more resistant to impact and smaller in volume than an HDD (Hard Disk Drive), and therefore the memory can be easily protected from impact and heat.

Next, a description will be given of a drive recorder according to a second embodiment.

The drive recorder according to the second embodiment is characterized in that a recording interval after an accident is set according to vehicle speed. It should be noted that the drive recorder is identical in construction to that shown in FIG. 3. In the following, the operation of the drive recorder according to the second embodiment will be described with reference to FIG. 3.

FIG. 5 is a flowchart showing the operation of the drive recorder according to the second embodiment.

Steps S10 to S13 are identical to the steps S1 to S4 in FIG. 4 showing the operation of the drive recorder according to the first embodiment. Similarly to the drive recorder according to the first embodiment, in the drive recorder according to the second embodiment, the recording interval for recording vehicle information is set to a shorter time period than that before the accident in a step S14. However, the recording interval is not uniformly set to a fixed time period of 0.1 seconds, but it is set according to the vehicle speed at a time when an impact was detected. The recording interval is set shorter as the speed is higher, and set longer as the speed is lower. This is because even if the recording interval is reduced when the vehicle speed is low, it is impossible to obtain useful information. Specifically, the CPU 101 sets the recording intervals, e.g. based on speed information on the automotive vehicle acquired from the electronic controller 111, such that vehicle information is recorded each time the automotive vehicle travels a distance of 2 to 3 m.

FIG. 6 is a diagram showing distances each traveled at a speed over a time period.

As a result of the study using such a diagram, it was found that in a case where it is desired to record vehicle information each time the vehicle travels a distance of 2 to 3 m, the recording interval should be set to a time period of 0.3 to 0.5 seconds when the vehicle speed is lower than 20 km/h, to a time period of 0.15 to 0.29 seconds when the vehicle speed is not lower than 20 km/h and lower than 50 km/h, to a time period of 0.06 to 0.14 seconds when the vehicle speed is not lower than 50 km/h and lower than 100 km/h, and to a time period not longer than 0.1 seconds when the vehicle speed is not lower than 100 km/h.

Vehicle information obtained after an accident is recorded in the FeRAM 102 at recording intervals set as above. It should be noted that operations in the following steps S15 and S16 are identical to the corresponding operations of the drive recorder according to the first embodiment.

The drive recorder according to the second embodiment, described above, can provide not only the same advantageous effects as provided by the drive recorder according to the first embodiment, but also an advantageous effect of being capable of recording detailed behavior of an automotive vehicle immediately after occurrence of an accident each time the automotive vehicle travels a distance of 2 to 3 m. Further, the recording interval can be set to a longer time period as the vehicle speed is lower, and therefore it is possible to avoid wasteful recording to thereby prolong the service life of the FeRAM 102.

Next, a description will be given of a drive recorder according to a third embodiment.

The drive recorder according to the third embodiment is characterized in that not only the recording interval after an accident, but also the recording interval before the accident is set according to vehicle speed. It should be noted that the drive recorder is identical in construction to that shown in FIG. 3. In the following, the operation of the drive recorder according to the third embodiment will be described with reference to FIG. 3.

FIG. 7 is a flowchart showing the operation of the drive recorder according to the third embodiment. In the drive recorder 100, the CPU 101 starts recording vehicle information in the FeRAM 102 immediately after new vehicle registration (step S20). When the recording is started, the CPU 101 changes the recording interval according to the vehicle speed (step S21). The recording interval is set shorter as the vehicle speed is higher, and set longer as the vehicle speed is lower. This is because even if the recording interval is reduced when the vehicle speed is low, it is impossible to obtain useful information. Specifically, the CPU 101 sets the recording interval, e.g. based on speed information of the automotive vehicle acquired from the electronic controller 111, such that vehicle information is recorded each time the automotive vehicle travels a distance of 3 to 5 m.

FIG. 8 is a diagram showing distances each traveled at a speed over a time period.

As a result of the study using such a diagram, it was found that in a case where it is desired to record vehicle information each time the vehicle travels a distance of 3 to 5 m, the recording interval should be set to a time period not longer than 1 second when the vehicle speed is not higher than 10 km/h, to a time period not longer than 0.8 seconds when the vehicle speed is not higher than 20 km/h, to a time period not longer than 0.6 seconds when the vehicle speed is not higher than 40 km/h, to a time period not longer than 0.4 seconds when the vehicle speed is not higher than 50 km/h, to a time period not longer than 0.25 seconds when the vehicle speed is not higher than 90 km/h, and to a time period of 0.1 seconds when the vehicle speed is not lower than 90 km/h. Further, the recording interval should be set to a time period of e.g. 30 seconds when the vehicle is at a stop.

The following steps S22 to S27 are identical to the steps S11 to S16 in FIG. 5 showing the operation of the drive recorder according to the second embodiment.

Thus, the drive recorder according to the third embodiment can provide not only the same advantageous effects as provided by the drive recorder according to either of the first and second embodiments, but also an advantageous effect of being capable of setting the recording interval to a longer time period when the vehicle speed is low before an accident, to make it possible to record an increased amount of information obtained immediately after occurrence of an accident, which is important for investigation of the behavior of the shocked automotive vehicle, in the FeRAM 102 having a limited capacity. Further, since wasteful recording can be avoided, it is possible to prolong the service life of the FeRAM 102.

Although in the drive recorder according to the third embodiment, the recording interval is set according to the vehicle speed after an accident, the recording intervals may be set to a fixed time period of 0.1 seconds.

Next, a description will be given of a drive recorder according to a fourth embodiment.

In the present embodiment, a description will be given of a case where the automotive vehicle receives a further impact after an accident. It should be noted that the drive recorder is identical in construction to that shown in FIG. 3. In the following, the operation of the drive recorder according to the third embodiment will be described with reference to FIG. 3.

FIG. 9 is a flowchart showing the operation of the drive recorder according to the fourth embodiment. Steps S30 to S34 are identical to the steps S1 to S5 in FIG. 4 showing the operation of the drive recorder according to the first embodiment. The drive recorder according to the fourth embodiment is characterized in that when the automotive vehicle receives an impact again after occurrence of an accident (step S35), a portion having received the impact is recorded in the FeRAM 102 (step S36). It should be noted that when the automotive vehicle does not receive an impact again, the same processing as in the drive recorder according to the first embodiment is carried out.

In the following, a detailed description will be given.

FIG. 10 is a diagram showing part of vehicle information recorded in the FeRAM.

As shown in the figure, vehicle speed, occurrence/non-occurrence of a slip, present/absence of an impact on the vehicle body, and the position of one of the impact sensors 110-1 to 110-n, which detected the impact, (portion having received the impact) are recorded in the FeRAM 102 in order starting with a record address "1". Let it be assumed, for example, that an impact occurs at a certain time point and vehicle information obtained at the time point is recorded e.g. in a record address "10" in the FeRAM 102. If it is determined in the step S32 that this impact is at the accident level, overwriting of vehicle information items in respective record addresses "1" to "9" is inhibited in the step S33. Then, vehicle information is continuously recorded in the FeRAM 102 at recording intervals set in the step S34. If any impact is detected again, a portion having received an impact is recorded in the step S36, as illustrated in each of record addresses "20" and "31" by way of example, without changing either the current recording interval or the overwrite-inhibited area, irrespective of the magnitude of the impact.

The following can be found by investigating the accident using the vehicle data shown in FIG. 10:

Example of accident investigation: In this accident, the automotive vehicle was contacted from behind first, which caused a slip. As a result, the vehicle slipped out of a lane in which it is traveling and came into contact with another vehicle coming from the front. Further, thereafter, the vehicle turned around to receive an impact from the left, and stopped.

Thus, the drive recorder according to the fourth embodiment can provide not only the same advantageous effects as provided by the drive recorder according to the first embodiment, but also an advantageous effect of being capable of investigating an situation of the accident even when an automotive vehicle receives an impact a plurality of times.

Although in the drive recorder according to the fourth embodiment, the recording interval before an accident and the recording interval after the accident, which is shorter than that before the accident, are set to respective fixed time periods (1 second and 0.1 seconds), the recording intervals may be set according to a vehicle speed before or after the accident, similarly to the drive recorder according to the second or third embodiment.

Although the drive recorders according to the four embodiments are described above with reference to the drawings, the present invention is not limited to the above. For example, a radio-controlled clock may be provided so as to record the time of the radio-controlled clock as vehicle information. By referring to this time and the position information of the GPS 112, it is possible to utilize the drive recorder to analyze an incident such as a hit-and-run case. More specifically, when a hit-and-run case occurs, an impact is detected by the impact sensors 101-1 to 101-n, and the CPU 101 determines that the detected impact is at the accident level. Pieces of information on the time and the position are recorded in the FeRAM 102, so that it is possible to identify when and where the hit-and-run case occurred. It is preferred that when the writing after reception of the impact is completed, writing in the FeRAM 102 is inhibited so as to prevent the written data from being tampered.

Further, sensors each for detecting human weight may be provided in the respective seats of a vehicle so as to record information indicative of the sensed human weight as vehicle information. This makes it possible to verify when or whether a human was thrown out from the vehicle.

Although in the above, when it is determined that an impact is at the accident level, overwriting of data recorded over a fixed time period (e.g. 10 minutes) before the accident is inhibited, overwriting of vehicle information recorded over a fixed distance (e.g. 200 m or more) that the vehicle traveled before the accident may be inhibited. This is suitable for the drive recorder according to the third embodiment, wherein the recording interval before an accident is set according to vehicle speed.

Further, although in the above, the FeRAM is employed, another nonvolatile memory, such as a flash memory, may be employed in place of the FeRAM. However, since it is required to realize a short writing interval of e.g. 1 second and enable writing to be performed numerous times as described above in the present embodiments, the use of the FeRAM is preferable. When a nonvolatile memory is not employed, data may be acquired using a DRAM or the like (for example, an amount of information corresponding to 1 M bytes is acquired, and when the DRAM is filled with the information, data is delivered to an HDD) and written in the HDD after the lapse of a predetermined time period.

Furthermore, an indicator lamp may be provided on an instrument panel before a driver's seat such that the indicator lamp is lit to indicate necessity of memory replacement when it becomes impossible to record any more data in the FRAM after occurrence of an accident-level situation.

Although in the above, the recording devices according to the embodiments of the present invention are each applied to an automotive vehicle, the present invention is also applicable to a train, a ship, and an airplane.

The foregoing is considered as illustrative only of the principles of the present invention. Further, since numerous modifications and changes will readily occur to those skilled in the art, it is not desired to limit the invention to the exact construction and applications shown and described, and accordingly, all suitable modifications and equivalents may be regarded as falling within the scope of the invention in the appended claims and their equivalents.

### Description of Reference Numerals

- 10: recording device
- 11: recording section
- 12: accident level-determining section
- 13: recording control section
- 20: impact-detecting section

## Claims

1. A recording device installed in a vehicle, comprising:
a recording section that records vehicle information indicative of current conditions of the vehicle at predetermined recording intervals;
an accident level-determining section that determines whether or not an accident has occurred, based on a magnitude of an impact on the vehicle detected by an impact-detecting section; and
a recording control section that is operable when it is determined that an accident has occurred, to cause said recording section to record the vehicle information at the recording intervals shorter than those before the accident.

2. The recording device according to claim 1, wherein when it is determined, upon detection of an impact, that no accident has occurred, said recording control section causes said recording section to record the vehicle information at the same recording intervals as those before detection of the impact, and when a remaining recording capacity of said recording section is used up, said recording control section causes said recording section to record new vehicle information by sequentially overwriting old items of the vehicle information in chronological order, oldest first.

3. The recording device according to claim 1, wherein when it is determined that an accident has occurred, said recording control section inhibits overwriting of part of the vehicle information recorded over a fixed time period before the accident.

4. The recording device according to claim 1, wherein said recording control section sets the recording interval before the accident to 1 second and the recording interval after the accident to 0.1 seconds.

5. The recording device according to claim 1, wherein when it is determined, upon detection of an impact, that an accident has occurred, said recording control section sets the recording interval after the accident according to a speed of the vehicle at the time when the impact is detected.

6. The recording device according to claim 5, wherein said recording control section sets the recording interval based on the speed such that the vehicle information is recorded each time the vehicle travels a distance of 2m to 3m.

7. The recording device according to claim 1, wherein said recording control section sets the recording interval before it is determined that an accident has occurred according to a speed of the vehicle.

8. The recording device according to claim 7, wherein said recording control section sets the recording interval based on the speed such that the vehicle information is recorded each time the vehicle travels a distance of 3m to 5m.

9. The recording device according to claim 1, wherein when it is determined, upon detection of an impact, that an accident has occurred, and then another impact is detected, said recording control section causes said recording section to record an impacted portion of the vehicle as the vehicle information, without changing the recording interval.

10. The recording device according to claim 1, wherein said recording section is a FeRAM.

11. The recording device according to claim 1, wherein said recording control section records a current time detected by a radio-controlled clock in said recording section at the recording intervals.

12. The recording device according to claim 1, wherein said recording control section records information on weight detected by a sensor provided in a seat of the vehicle in said recording section at the recording intervals.

13. The recording device according to claim 1, wherein when it is determined that an accident has occurred, and then recording of the vehicle information obtained after the accident is terminated, said recording control section places said recording section in a write protect state.

14. The recording device installed in a vehicle, comprising:
a recording section that records vehicle information indicative of current conditions of the vehicle at predetermined recording intervals;
an accident level-determining section that determines whether or not an accident has occurred, based on a magnitude of an impact on the vehicle detected by an impact-detecting section; and
a recording control section that sets the recording interval before it is determined that an accident has occurred according to a speed of the vehicle.

15. A recording method, comprising:
recording vehicle information indicative of current conditions of a vehicle in a recording section at predetermined recording intervals;
determining whether or not an accident has occurred, based on a magnitude of an impact on the vehicle detected by an impact-detecting section; and
recording the vehicle information in the recording section at the recording intervals shorter than those before the accident when it is determined that that accident has occurred.

16. The recording method according to claim 15, wherein when it is determined, upon detection of an impact, that an accident has occurred, the recording interval after the accident is set according to a speed of the vehicle at the time when the impact is detected.

17. The recording method according to claim 16, wherein the recording interval is set based on the speed such that the vehicle information is recorded each time the vehicle travels a distance of 2m to 3m.

18. The recording method according to claim 15, wherein the recording interval before it is determined that an accident has occurred is set according to a speed of the vehicle.

19. The recording method according to claim 18, wherein the recording interval is set based on the speed such that the vehicle information is recorded each time the vehicle travels a distance of 3m to 5m.

20. The recording method according to claim 15, wherein when it is determined, upon detection of an impact, that an accident has occurred, and then another impact is detected, an impacted portion of the vehicle is recorded as the vehicle information in the recording section, without changing the recording interval.
